# EUROPEAN PATENT APPLICATION

(11) **EP 1 122 100 A2**
(43) Date of publication of application: **08.08.2001**
(21) Application number: 00120053.4
(22) Date of filing: 15.09.2000
(51) Int. Cl.: B60C 29/06

(54) **Inflation valve for vehicle tyres**

(30) Priority: 02.02.2000 IT MI000059
(71) Applicant: BRIDGEPORT BRASS S.P.A., I-24036 Ponte San Pietro, (Bergamo) (IT)
(72) Inventor: Leo, Leonardo, 25065 Lumezzane, (Brescia) (IT); Fratus, Roberto, 25036 Palazzolo Sull'Oglio, (Brescia) (IT)
(74) Representative: Petruzziello, Aldo

(57) **Abstract**

SUMMARY

An inflation valve (1; 100) for vehicle tyres, including a casing (2) with an axial cavity (3) allowing the passage of compressed air to inflate the tyre, and a tag (11; 11') applied to the valve, including a rectangular band (14; 14'), which contains information regarding said valve.

## Description

The present innovation refers to an inflation valve for vehicle tyres. Currently, inflation valves are commercially available for vehicle tyres, which include a hollow valve casing with two open ends, one of which communicates with the internal tyre chamber and the other protrudes externally from the tyre capable of receiving a tyre pump inflation nozzle.

Such inflation valves are produced separately from the tyre and then matched with them.

All known inflation valves have the disadvantage of not providing any information for the user (the tyre repairer working on the tyre or the vehicle owner).

Instead it would be extremely useful if easily visible information was provided, for example details concerning the manufacturer and the valve guarantee.

The purpose of the innovation is to overcome such a drawback by supplying an inflation valve capable of providing the user with useful information.

This aim is reached in accordance with the innovation with the characteristics enclosed in the independent claim 1.

Advantageous embodiments of the innovation are made clear by the dependent claims.

The inflation valve, according to the innovation, envisages a tag which is applied to the valve casing. The tag contains information relating to such valve. The tag may contain information on the valve manufacturer, guarantee period, type of valve fitting etc.

The tag may be made of different types of material, and may be removed by the user or left in situ to wear away after a certain time period due to the action of external atmospheric agents.

In an initial embodiment, such a tag has a basically rectangular shape with a rounded end containing a circular hole attached to the free valve end. In this way, the user can remove the tag by pulling or tearing, or it may wear away over time.

In a second embodiment, the tag envelops the middle part of the inflation valve casing and is stuck to it. For such a purpose, adhesive card may be used which can be easily removed by the user, or left in situ to wear away over time.

Additional characteristics of the innovation will be made clearer by the detailed description which follows, referring to its purely illustrative embodiments, and hence non-limiting, shown in the enclosed drawings in which:
Fig. 1 is an exploded plan view of an inflation valve for a vehicle tyre according to the innovation;
Fig. 2 is a plan view of the inflation valve in Fig. 1 when assembled;
Fig. 3 is a view from the left of Fig. 2, a sketch showing a tag in extracted position.
Fig. 4 is a perspective view of a second embodiment of the valve according to the innovation;
Fig. 5 is a plan view of the inflation valve in Fig. 4.

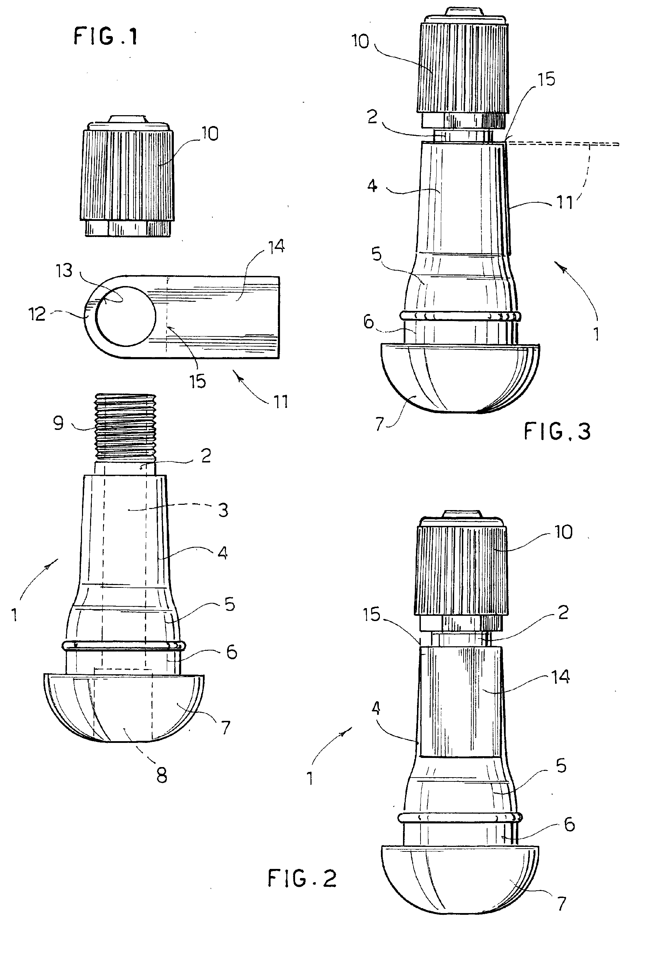

Figs. 1-3 are used to help describe a first embodiment of a tyre inflation valve, according to the innovation, which as a whole is indicated by reference number 1.

The valve 1 includes a basically cylindrical shaped casing 2 axially presenting a through cavity 3, through which compressed air passes to inflate the tyre. The casing 2 is generally made of metallic material or other hard and resistant material. The casing 2 is partially covered by an external wrapper of basically elastic and soft plastic material. Such external wrapper includes a first cylindrical part 4 continuing with a growing diameter cone-shaped part 5, ending in a dome-shaped head 7. Between the cone-shaped part 5 and dome-shaped head 7 is envisaged an annular seating 6 which can attach itself to the rim thickness, so that the head 7 is situated inside the tyre chamber and the cylindrical part 4 protrudes externally from the tyre. The head 7 envisages an axial hole 8 in communication with the axial hole 3 of the valve casing 2.

The part of the casing 2 which is not covered by the wrapper envisages an external screw thread 9 coming into contact with a complementary internal screw thread on a cap 10 of the valve. The cap 10 is generally made of hard plastic material, essentially cylindrically shaped with a knurled external surface to simplify screwing operations for the user.

According to this first embodiment of the innovation, valve 1 envisages a tag 11 of basically flattened rectangular shape with a rounded end 12. The tag has a circular hole 13 near the rounded end 12, with virtually the same diameter to that of the valve casing 2. Hence the tag 11 can be applied to the valve 1 by inserting the free end of the casing 2 into the tag hole 13.

Opposite the rounded end 12 of the tag 11, is a rectangular surface 14 able to contain valve information 1. The surface 14 may contain information, namely the valve brand, guarantee period, fitting system etc.

The tag 11 is fitted by insertion or screwing. In the latter case, hole 13 of the tag rotates around the screw thread 9 of casing 2, so that the tag comes into contact with the cylindrical wrapper part 4. To secure the tag 11 and stop its removal from the valve by unscrewing, a small amount of adhesive may be applied around the hole 13 to fasten the tag 11 to the valve casing 2. Then the cap 10 is screwed onto the screw thread 9, preventing the accidental detachment of the tag from the valve casing 2.

This eliminates the risk of tampering with tag 11 before fitting the valve onto the wheel. Tag 11, as shown in Fig. 2, is bent along the line 15 which delimits the surface 14 containing the information. Hence tag 11 lies along the surface of the cylindrical wrapper 4 and is essentially parallel to the axis of valve 1, thus occupying minimum space.

As shown in Fig. 3, when a user wishes to read the information contained on the tag surface 14, the tag 11 is bent along line 15 thus essentially bringing it at a right angle to the axis of valve 1.

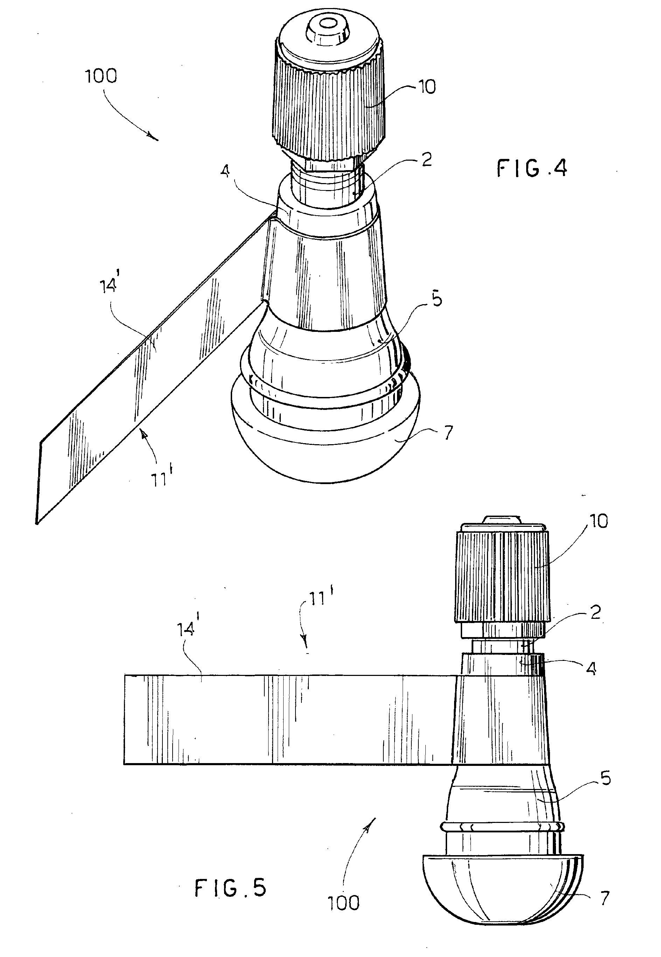

With reference to Figs. 4 and 5, a second embodiment of a tyre inflation valve 100 is described, according to the innovation, in which the same reference numbers have been used to indicate parts which are the same or corresponding to those described in the first embodiment.

In this second embodiment, valve 100 includes a valve casing 2, a valve wrapper 4 and 5, a valve head 7 and a valve cap 10 which are basically identical to those described in the initial embodiment.

In this second embodiment, the valve 100 envisages a tag 11', composed of a rectangular strip, with no circular hole. The strip 11' is wrapped around the cylindrical wall 4 of the valve wrapper. In this case the tag 11' can be of adhesive type so as to stick to the surface of the cylindrical part 4 of the wrapper, or some glue may be applied to the surface of the tag 11' to then be applied to the cylindrical part of the wrapper.

Tag 11' has a rectangular surface 14' which may contain information concerning valve 100. The rectangular surface 14 protrudes externally from the cylindrical part 4 of the wrapper so that such information is readable.

The adhesive tags 11 and 11' of the first and second embodiment respectively, can be made of any kind of multilayer or monolayer material; it being essential that these have a band 14, 14' which contains valve information.

Tags 11 and 11' can be made of tearable material such as paper. Hence, when required, the tag can be removed by the user, by tearing, or can be left in situ, to gradually tear and wear away through use.

Tags 11 and 11' can also be made of plastic, such as polyester, in which case it is preferable that these are removed during fitting.

It is possible for a skilled in the art to make several additional changes and variations to the present embodiments without leading away from the scope of the innovation expressed by the enclosed claims.

## Claims

1. An inflation valve (1; 100) for vehicle tyres, including a casing (2) with an axial cavity (3) allowing the passage of compressed air to inflate the tyre, characterised in that it includes a tag (11; 11') which contains valve information.

2. A valve (1) according to claim 1, characterised in that said tag (11) envisages a hole (13) so that the body (2) of said valve can enter said hole.

3. A valve (1) according to claim 2, characterised in that said casing (2) envisages an end with an external screw thread (9) to receive a cap (10) with internal screw thread, the tag (11) being screwed onto said threaded end (9) of the valve casing and cap (10) avoiding the release of said tag.

4. A valve (1) according to claims 2 or 3, characterised in that some glue is applied around said tag hole (13) to fasten the tag (11) to said valve casing (2) to avoid unauthorised removal of said tag.

5. A valve (100) according to claim 1, characterised in that said tag (11') is wrapped around said valve casing (2).

6. A valve (100) according to claim 1, characterised in that said valve casing (2) is covered by a wrapper (4, 5) and said tag (11') is wrapped and glued around the external surface of said wrapper (4, 5).

7. A valve according to claim 5 or 6, characterised in that said tag (11) is an adhesive strip.

8. A valve (1; 100) according to any of the previous claims, characterised in that said tag (11, 11') is made of paper.

9. A valve (1; 100) according to any of claims 1 to 7, characterised in that said tag (11, 11') is made of polyester.

10. A tag (11, 11') including a band (14, 14') which contains information, characterised in that it is applied to an inflation valve (1; 100) for vehicle tyres.
